# EUROPEAN PATENT APPLICATION

(11) **EP 2 395 672 A1**
(43) Date of publication of application: **14.12.2011**
(21) Application number: 10005918.7
(22) Date of filing: 08.06.2010
(51) Int. Cl.: H04B 1/38, G06K 19/077, H04N 5/907

(54) **A flash disk with a replaceable memory for receiving signals from the digital tv or the digital radio**

(71) Applicant: Ceramate Technical Co., Ltd, Taoyuan County (TW)
(72) Inventor: Wang, Robert, Luch Taoyuan County (TW)
(74) Representative: Kandlbinder, Markus Christian

(57) **Abstract**

A flash disk with a replaceable memory for receiving signals from the digital TV or the digital radio comprises a flash disk body with a terminal and a memory slot for accommodating a memory. Wherein, the flash disk body installs a receiver offering a telescopic antenna, and positions a circuit module electrically connecting with the antenna. Hence, the antenna receives the digital signals, and the circuit module executes the modulation and the transmission. Connecting the terminal to an electronic accessing unit, users readily access the digital TV or the digital radio. Preferably, by means of replacing the memory, an appropriate capacity of the memory could be expansively provided for users to flexibly access their data.

## Description

### BACKGROUND OF THE INVENTION

### 1. Field of the Invention

The present invention relates to a flash disk with a replaceable memory for receiving signals from the digital TV or the digital radio.

### 2. Description of the Related Art

By the worldwide gradually developed digital TV channels, the related technology has become a great issue. With the popularization of the portable products, like the PC, the Plasma Display Panel (PDP), the digital picture frames, and e-books, people could conveniently access TV or radio channels not only through computers but through the TVs or the radios.

Generally, receivers adopted in the digital TV or the digital radio of the PC or the notebook include the digital set top boxes and the digital TV cards. However, such receivers merely provides with the receiving function; they are unable to offer a replaceable memory. As a result, in order to speedily access the data that is of large volume and to concurrently acquire TV or radio channels, users have to respectively carry different digital TV cards and other flash disks. Accordingly, afore operation is inconvenient, and the waste amount of the plastic and the electronic parts is adversely increased, which is wasteful and unbenefited for the Earth. Thus, such problem needs to be mended.

### SUMMARY OF THE INVENTION

It is an object of the present invention to provide a flash disk with a replaceable memory for receiving signals from the digital TV or the digital radio. The correspondent invention comprises a flash disk body, a memory, a receiver, and a circuit module. Wherein, the flash disk body includes a terminal and a memory slot that could be inserted by the moveable memory. Moreover, the receiver structurally installed on the flash disk body further provides with a telescopic antenna. Additionally, the circuit module is disposed in the flash disk body as well as electrically connected to the antenna.

Thereby, the antenna promotes the receipt of the digital signals, and the circuit module executes the modulation and the transmission. Whereby, the digital TV or the digital radio will be accessible while users just simply connect the terminal with the electronic accessing unit. Concurrently, the memory capacity could be preferably adjusted by users inserting different memories in the memory slot; therefore, users could also flexibly access their needed data. Namely, the single flash disk with respect to the present invention provides multiple functions, thence preventing users from carrying miscellaneous flash disks with them.

### BRIEF DESCRIPTION OF THE DRAWINGS

Fig. **1** is a perspective view showing the present invention;
Fig. **2** is an exploded view showing the present invention;
Fig. **3** is a schematic view showing the connection state of the circuit; and
Fig. **4** is a schematic view of the present invention in using.

### DETAILED DESCRIPTION OF THE PREFERRED EMBODIMENTS

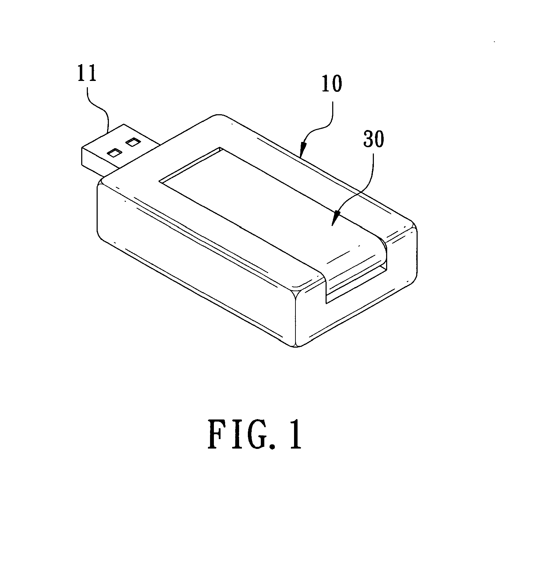

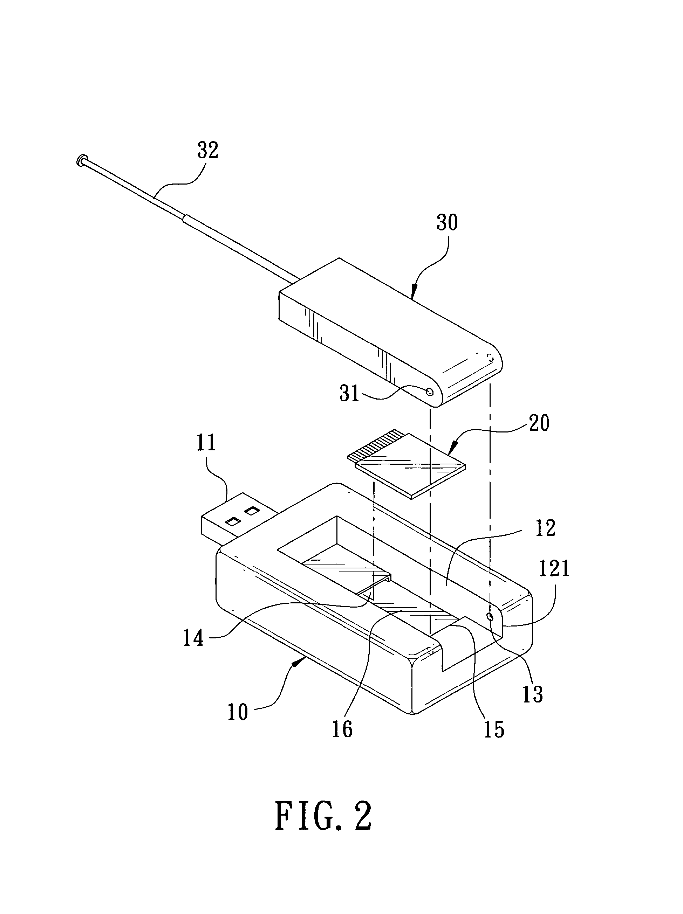

Referring to Figs. 1 and 2, a perspective view and an exploded view of the present invention comprises:
A rectangular flash disk body 10 has one side transversely provided with a terminal 11. Wherein, the terminal 11 adopts the Universal Serial Bus (USB). Further, on a top of the flash disk body 10, an indentation 12 is longitudinally defined thereon, opposite to the terminal 11; herein, an opening 121 is transversely formed at the other side of the flash disk body 10. Additionally, two side walls of the indentation 12 extending to where the opening 121 is defined further respectively dispose two opposite limiting slots 13. Concomitantly, the indentation 12 further correspondingly spaces a memory slot 14 and a stop flange 15 at intervals. Thereby, a moving space 16 that is slightly lower than the stop flange 15 is arranged between the memory slot 14 and the stop flange 15.

A memory 20, disposed in the moving space 16, could be movably inserted in the memory slot 14. Wherein, since the moving space 16 is defined lower than the stop flange 15, the memory 20 could be limited within the moving space 16. Preferably, the memory 20 is replaceable. In the preferred embodiment, the memory 20 adopts either the SD card or any other existing memory cards.

A receiver 30 is pivoted on the indentation 12 of the flash disk body 10. Wherein, the receiver 30 installs two limiting protrusions 31 in correspondence with the limiting slots 13, thereby rendering a fitting engagement between the limiting slots 13 and the limiting protrusions 31. Accordingly, the limiting protrusions 31 serve as a pivot, thence allowing the receiver 30 to be rotatively mobile on the indentation 12 of the flash disk body 10. Herein, the receiver 30 also provides with a telescopic antenna 32 mechanically mounted at one side thereof and disposed relatively to the terminal 11

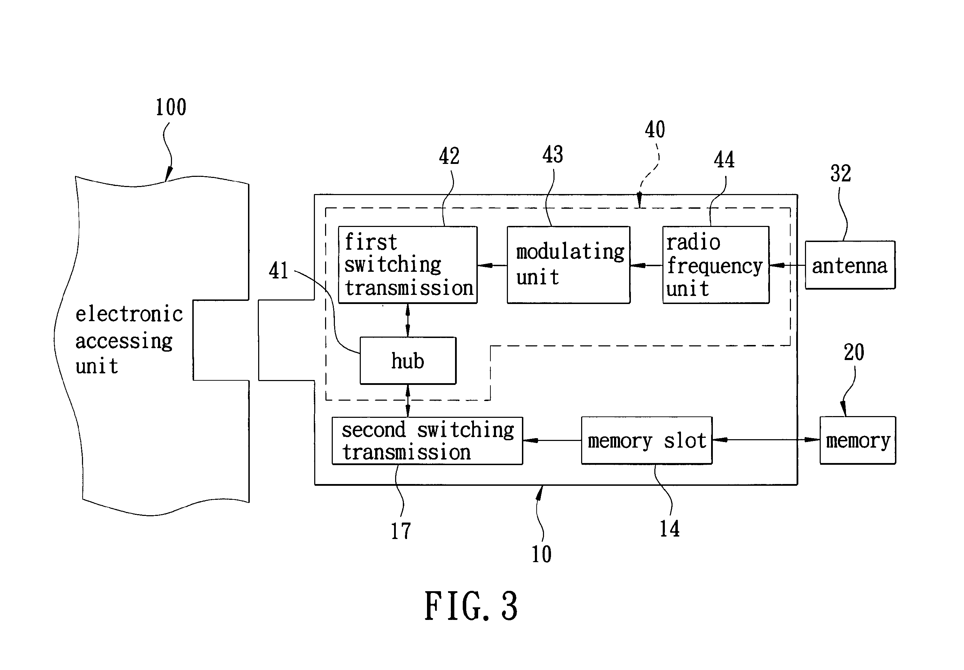

Further referring to Fig. 3, a schematic view of the circuit connection state is shown. A circuit module 40 positioned in the flash disk body 10 is electrically connected to the antenna 32. Wherein, the circuit module 40 has a hub 41, a first switching transmission 42, a modulating unit 43, and a radio frequency unit 44. Specifically, one side of the hub 41 is connected to the terminal 11, and the other side thereof is connected to the first switching transmission 42. Preferably, the first switching transmission 42 links to the modulating unit 43, and the modulating unit 43 further links to the radio frequency unit 44. Additionally, the radio frequency unit 44 is electrically connected to the antenna 32 of the receiver 30. Thereby, the antenna 32 receives the digital signals for the circuit module 40 to execute the modulation and the transmission. In this preferred embodiment, the hub 41 could alternatively implement a connection with the memory slot 14 via a second switching transmission 17.

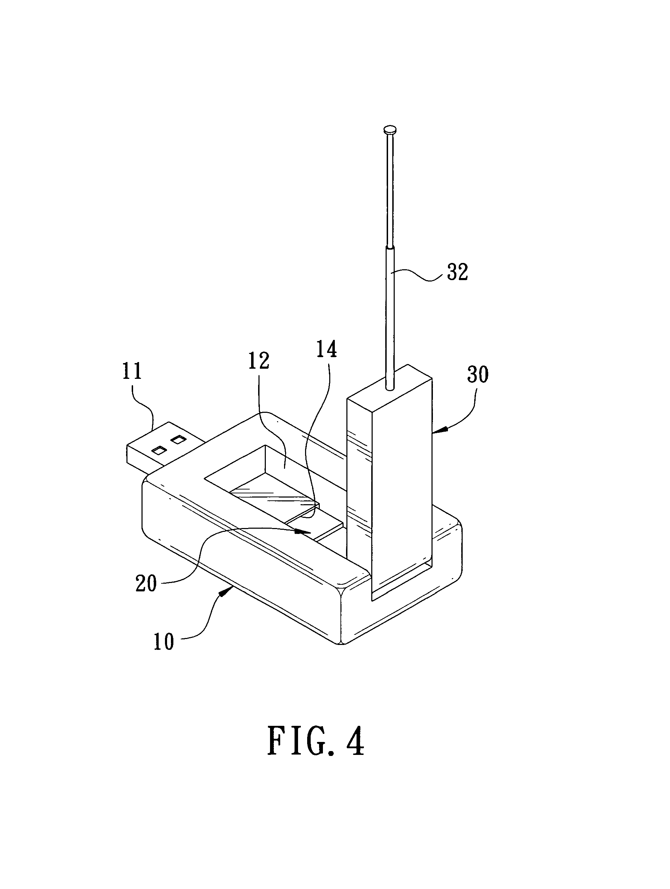

In order to provide a more substantial practice of the present invention, the detailed characteristics, applied skills, and the desired efficiency are depicted as follows:
Further referring to Fig. 4, if users would like to access the digital TV or the digital radio via the present invention, they just have to set the connection between the terminal 11 of the flash disk body 10 and an electronic accessing unit 100. Herein, the electronic accessing unit 100 could adopt the PC, the personal media player, the digital picture frame, or the e-books, etc. Accordingly, the receiver 30 would be pivotally rotated for setting by an upright position, and the antenna 32 would be drawn out to a certain length. Thereby, the antenna 32 receives the digital signal, and the radio frequency unit 44 as well as the modulating unit 43 respectively executes a modulation. Sequentially, the hub 41 transmits the modulation to the electronic accessing unit 100. As a result, the digital TV and the digital radio are all available on the electronic accessing unit 100. While users replace the memory 20 in the memory slot 14 for achieving an adaptable memory capacity, the accessing of the data could be more extensive, and users do not have to carry various flash disks with them.

## Claims

1. A flash disk with a replaceable memory for receiving signals from the digital TV or the digital radio, comprising:
a flash disk body including a terminal and a memory slot;
a replaceable memory being inserted in said memory slot;
a receiver being structurally installed on said flash disk body and including a telescopic antenna; and
a circuit module installed in said flash disk body as well as electrically connected to said antenna.

2. The flash disk as claimed in claim 1, wherein, said flash disk body further defines an indentation thereon for being pivoted with said receiver.

3. The flash disk as claimed in claim 2, wherein, two sides of said indentation respectively provides with a pair of correspondent limiting slots, and said receiver further provides two limiting protrusions for accordingly engaging with said limiting slots.

4. The flash disk as claimed in claim 2, wherein, said memory slot is defined on a bottom side of said indentation of said flash disk body.

5. The flash disk as claimed in claim 4, wherein, a stop flange is protruded from said bottom side of said indentation of said flash disk body, and a moving space is defined between said stop flange and said memory slot; said moving space is slightly lower than said stop flange.

6. The flash disk as claimed in claim 1, wherein, said circuit module further includes a hub, a first switching transmission, a modulating unit, and a radio frequency unit; one side of said hub is connected to said terminal, and the other side of said hub is connected to said first switching transmission; said first switching transmission further link to said modulating unit, and said radio frequency unit connects to said antenna of said receiver.

7. The flash disk as claimed in claim 1, wherein, a hub and a second switching transmission are linked between said terminal and said memory slot; one side of said hub connects to said terminal, and the other side of said hub connects to said second switching transmission; said second switching transmission links to said memory slot.

8. The flash disk as claimed in claim 1, wherein, said terminal adopts a Universal Serial Bus (USB).
